# FASCICULE DE BREVET EUROPEEN

(11) **EP 1 540 250 B1**
(45) Date de publication et mention de la délivrance du brevet: **21.09.2011**
(21) Numéro de dépôt: 03761658.8
(22) Date de dépôt: 27.06.2003
(51) Int. Cl.: F23D 14/84, F23D 14/58

(54) **DISPOSITIF A COMBUSTION DU TYPE BRULEUR A GAZ ET METHODE D'UTILISATION ASSOCIEE**
GASBRENNER-VERBRENNUNGSVORRICHTUNG UND VERFAHREN ZU DEREN BETRIEB
GAS BURNER-TYPE COMBUSTION DEVICE AND METHOD FOR OPERATING SAME

(30) Priorité: 27.06.2002 FR 0207983
(43) Date de publication de la demande: 15.06.2005
(73) Titulaire: Jaulent, Gérard, 82000 Montauban (FR)
(72) Inventeur: Jaulent, Gérard, 82000 Montauban (FR)
(74) Mandataire: Richebourg, Michel François
(86) Numéro de dépôt international: PCT/FR2003/002003
(87) Numéro de publication internationale: WO 2004/003432

(56) Documents cités:
- EP-A- 1 186 234
- WO-A-91/14363
- WO-A-99/38378
- DE-C- 559 758
- DE-U- 9 011 567
- DE-U- 29 921 977
- FR-A- 2 823 644
- GB-A- 1 594 435
- US-A- 2 526 748
- US-A- 4 199 934
- US-A- 5 343 693

## Description

### DOMAINE D'APPLICATION DE L'INVENTION

La présente invention a trait au domaine des appareils à combustion du type brûleur à gaz et plus particulièrement aux adaptations permettant de réaliser le réglage de l'intensité et de la géométrie de la flamme produite.

### DESCRIPTION DE L'ART ANTÉRIEUR

Le demandeur a constaté que les divers dispositifs appartenant au domaine des brûleurs dans le cadre d'un désherbage thermique présentaient des inconvénients dont les principaux sont décrits ci-après.

Les brûleurs à gaz décrits dans les brevets français FR2752145, FR2792499 et FR2793415, constituent la base de dispositifs d'effeuillage et/ou de désinfection thermique.

Il apparaît que ces brûleurs ne permettent pas le réglage de la zone effective et efficace d'action des flammes produites par ce dernier. Or, un bon désherbage thermique bénéficiant d'une orientation et d'un réglage particulièrement précis des flammes produites, serait particulièrement efficace afin d'éviter d'une part, toute dépense inutile de gaz et d'autre part, qu'une partie des cultures soit soumise involontairement audit traitement thermique. Le document DE 9011567 U décrit par ailleurs un brûleur de désherbage thermique muni d'un élément diffuseur de flammes.

De même, les brûleurs de l'art antérieur sont configurés spécifiquement pour le désherbage thermique d'un type de culture ou sont adaptés pour une application en particulier et ne peuvent être utilisés pour d'autres applications. En conséquence, les dispositifs de désherbage thermique de l'art antérieur ne proposent pas ce réglage de diffusion et équipent classiquement leur brûleur d'une seule buse adoptant une forme unique. Ce manque de flexibilité a pour conséquences un gaspillage d'énergie ainsi qu'une limitation dans les applications possibles desdits brûleurs.

Un autre inconvénient constaté par le demandeur, réside dans le fait que les dispositifs de désherbage thermique de l'art antérieur ne tiennent pas compte de la densité des mauvaises herbes ou du végétal à détruire et ne proposent qu'un flux de gaz constant malgré la variation de cette densité.

Il existe également dans l'art antérieur, des brûleurs à gaz plus classiques non spécifiques au désherbage thermique tel celui décrit dans le document américain n° 2,526,748 qui propose un brûleur à ouverture conique à l'intérieur de laquelle sont disposés un cône de diffusion des flammes ainsi qu'un cône de guidage pour les flammes, lesdits cônes étant à géométrie fixe.

Un tel brûleur a pour inconvénient de séparer le gaz de l'air jusqu'à l'inflammation ce qui a pour conséquence un rendement médiocre. Le cône de diffusion éclate le flux de gaz tandis que le cône de guidage éclate l'air pour l'amener jusqu'à la sortie de la buse de projection du gaz. Néanmoins, l'air n'est pas projeté hors des cônes. De plus, les cônes constituant le brûleur adoptent la même conicité ce qui ne contribue pas à la création d'une accélération ou à un effet venturi nécessaire à une bonne projection des flammes.

### DESCRIPTION DE L'INVENTION

Partant de cet état de fait, le demandeur a mené des recherches visant à remédier au manque de flexibilité des dispositifs à combustion de type brûleur de l'art antérieur.

Ces recherches ont abouti à la conception d'un dispositif de désherbage thermique à combustion du type brûleur à gaz selon l'objet de la revendication 1 permettant d'obvier aux inconvénients des dispositifs de l'art antérieur en proposant de réguler non seulement le champ d'action des flammes produites par le brûleur mais également la puissance de ces dernières.

Selon l'invention, le dispositif à combustion du type brûleur à gaz dit "brûleur" projetant un mélange d'air et de gaz enflammé en sortie d'une conduite est remarquable en ce qu'il est équipé d'un cône mobile de diffusion dont le sommet est disposé au moins en amont du lieu de création des flammes pour assurer l'éclatement du mélange d'air avec le gaz, le déplacement relatif du cône selon l'axe de diffusion défini par les flammes permettant le réglage de la puissance de ces dernières.

Ainsi, l'éclatement du flux étant réalisé alors que le mélange n'est pas encore enflammé, c'est à dire à l'intérieur du brûleur, cette opération n'est pas soumise aux aléas de l'environnement extérieur qui pourraient être particulièrement gênants si la flamme était éclatée en sortie de brûleur.

De plus, en jouant sur l'écart entre la surface extérieure du cône et la surface intérieure de la sortie de conduite, le dispositif de l'invention est particulièrement avantageux en ce qu'il crée un effet dit "Venturi" provoquant l'accélération du mélange air/gaz et donc l'augmentation de la puissance des flammes. En conséquence, le dispositif de l'invention permet de réguler, en mettant en mouvement le cône de diffusion, la puissance du brûleur.

L'utilisation d'un cône a également pour avantage de garantir un bonne répartition du mélange et en conséquence de la flamme créée.

Contrairement au brûleur décrit dans le document américain n° 2,526,748, le dispositif de l'invention éclate le mélange formé par le gaz et par l'air, non le gaz et l'air séparément. Ainsi, la mobilité du cône agit sur le lieu de l'éclatement du flux du mélange à l'intérieur du brûleur alors que la mobilité relative des cônes décrit dans ledit document américain ne permettait d'agir que sur le flux de gaz.

Selon une caractéristique particulièrement avantageuse de l'invention, ledit cône se déploie ou se replie de façon à ce que le diamètre de la base dudit cône évolue pendant le fonctionnement du brûleur selon l'utilisation du brûleur de sorte que la flamme adopte la configuration déployée ou repliée du cône pendant le fonctionnement.

Cette caractéristique résout les inconvénients des dispositifs de l'art antérieur qui manquaient de précision et de flexibilité. En effet, la variation contrôlée de la base du cône de diffusion permet la régulation de la géométrie de la flamme et en conséquence de la zone active d'effet des flammes.

La régulation conjuguée de la puissance et de la géométrie de la flamme résout les problèmes de flexibilité des dispositifs de l'art antérieur.

Un autre objet de l'invention réside dans le procédé de travail d'un tel dispositif de type brûleur à gaz dont le fonctionnement dans le cadre d'une application de type désherbage thermique est associé à la détection et au calcul de la densité du spectre foliaire.

Ainsi, selon une caractéristique particulièrement avantageuse de l'invention, le procédé de travail du dispositif est remarquable en ce qu'il consiste à augmenter ou à diminuer la puissance ou la géométrie des flammes respectivement par déplacement ou par ouverture et fermeture du cône selon l'augmentation ou la diminution du spectre foliaire détecté.

Cette caractéristique est particulièrement avantageuse en ce qu'elle garantit une gestion optimisée de la consommation du gaz et permet donc d'en faire l'économie lorsque cela est possible.

Les concepts fondamentaux de l'invention venant d'être décrits, d'autres caractéristiques et d'autres avantages apparaîtront plus en détail à la lecture de la description qui suit et en regard des dessins annexés d'un mode de réalisation d'un dispositif de type brûleur à gaz conforme à l'invention.

### BRÈVE DESCRIPTION DES DESSINS

La figure 1 est une vue en coupe d'un mode de réalisation d'un brûleur conforme à l'invention, la cloche de protection étant omise,
les figures 2a, 2b, 2c, sont des vues en coupe du mode de réalisation de la figure 1 illustrant plusieurs positions du cône diffuseur,
les figures 3a et 3b, sont des vues schématiques en perspective de détail du cône de diffusion seul,
la figure 4 est une vue schématique d'un mode de réalisation du dispositif de l'invention équipé de la cloche de protection et présenté en coupe,
la figure 5 est une vue schématique de côté illustrant un autre mode de réalisation du dispositif de l'invention installé en situation.

### DESCRIPTION DES MODES DE RÉALISATION

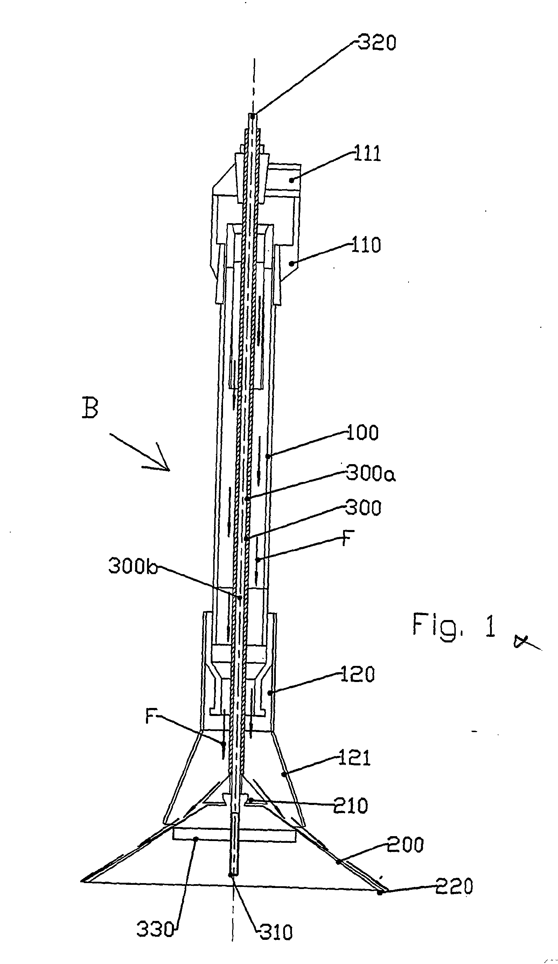

Tel qu'illustré sur le dessin de la figure 1, le dispositif de type brûleur à gaz dit brûleur référencé B dans son ensemble comprend un corps cylindrique creux 100, dont l'extrémité supérieure 110 est équipée d'un moyen d'arrivée de gaz matérialisé par un raccord 111 et dont l'extrémité inférieure 120 s'ouvre pour laisser s'échapper le mélange gaz plus air qui est enflammé. Le parcours du gaz est symbolisé par les flèches F.

Conformément à l'invention, le brûleur B comporte un cône de diffusion 200 dont le sommet 210 est disposé en amont du lieu de création de la flamme pour assurer l'éclatement du mélange d'air avec le gaz non encore enflammé. Ainsi, le flux de gaz et d'air est éclaté à l'intérieur du brûleur B de façon à ce que cette opération ne soit pas gênée par des contraintes extérieures garantissant de ce fait une bonne répartition des flammes.

Selon l'invention, ce cône 200 est mobile et coopère avec une tuyère fixe 121 équipant l'extrémité 120 inférieure du brûleur B munie du cône de diffusion participant à la diffusion des flammes de façon à ce que l'effet venturi recherché soit réglable selon l'augmentation ou la diminution de l'espace présent entre la surface extérieure du cône 200 et la surface intérieure de la tuyère 121. La variation de la position du cône 200 autorise donc la variation de la puissance des flammes. Ce réglage de la puissance du flux de mélange et donc du jet de flammes est optimisée par le fait que la tuyère fixe 121 et le cône de diffusion adopte une conicité différente ou une pente différente. Ce brûleur B a également pour spécificité d'assurer un éclatement du jet de gaz avant sa sortie de la tuyère formée par le cône fixe formée par la tuyère 121 et donc avant son inflammation. Une fois que le flux de gaz réparti sur la périphérie du cône 200 vient à l'extérieur, ce dernier est enflammé.

Selon une autre caractéristique particulièrement avantageuse de l'invention, la géométrie des flammes produites est également réglable. En effet, le cône 200 ayant pour fonction d'éclater le flux de gaz projeté traversant le corps principal 100 et permettre ainsi la répartition des flammes sur la périphérie extérieure du cône diffuseur 200, autorise également une évolution de la base définissant l'angle d'inclinaison du cône de diffusion réglant de ce fait l'envergure de la zone de diffusion desdites flammes.

Le diamètre de la base 220 dudit cône 200 est réglable pendant le fonctionnement du brûleur B selon l'utilisation du brûleur B. Ce cône 200 a non seulement pour fonction d'assurer une bonne répartition du flux de flammes créé en éclatant le flux de gaz au bon endroit mais il permet également de régler l'amplitude de cette répartition.

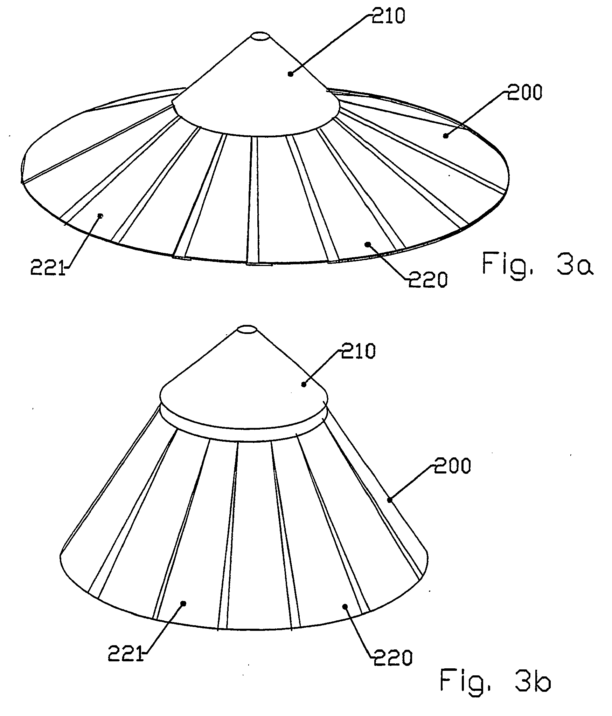

Ainsi, comme illustré sur les dessins des figures 3a et 3b, ledit cône 200 est constitué d'un sommet 210 et d'une partie inférieure 220 composée d'une pluralité de pales 221, ici indépendantes les unes des autres, montées articulées par rapport au sommet pour passer d'une position déployée telle qu'illustrée en figure 3a à une position repliée telle qu'illustrée en figure 3b et vice-versa faisant ainsi varier le diamètre de la base du cône de diffusion 200.

Selon un mode de réalisation particulièrement avantageux, les pales 221 constituant la partie inférieure sont articulées à la partie fixe supérieure de façon à tendre à replier ledit cône 200. Selon un choix technologique particulièrement judicieux, ces pales 221 tendent à replier le cône 200 de par leur poids.

Afin d'éviter une déperdition de flammes entre les pales lorsque ces dernières formant la partie inférieure du cône s'écartent pour se déployer, lesdites pales 221 sont de dimensions telles et disposées de telle façon, que leurs côtés se chevauchent d'une pale 221 sur l'autre quelle que soit leur position de sorte que même en position déployée, ces dernières ne laissent aucun espace entre elles. Pour ce faire selon le mode de réalisation illustré, chaque pale 221 adopte la forme d'un trapèze dont un des côtés non parallèles est préformé pour venir être recouvert ou recouvrir le côté non parallèle du trapèze formé par la pale 221 adjacente.

La mise en oeuvre de cette variation du diamètre de la base du cône de diffusion a fait l'objet d'un soin particulier par le demandeur puisque cette dernière doit pouvoir être réalisée pendant le fonctionnement du brûleur pour adapter la géométrie de la flamme créée aux besoins des utilisateurs du brûleur B.

Selon l'invention, l'ouverture et la fermeture du cône 200 ainsi que son déplacement relatif par rapport au corps 100 du brûleur B sont mis en oeuvre par les déplacements relatifs contrôlés d'au moins une tige de commande 300. Comme illustrée, cette tige 300 est placée à l'intérieur du corps 100 du brûleur B et déborde des extrémités dudit corps 100. Une des extrémités référencée 310 de ladite tige de commande 300 est en liaison avec ledit cône 200.

Comme illustré, le brûleur B comporte une cale 330 située à l'intérieur du cône 200 et en appui constant avec lesdites pales 221, ladite cale 330 étant en liaison avec ladite tige de commande 300 dont l'actionnement assure le déplacement de ladite cale de sorte que lorsque la tige 300 est actionnée au moyen par exemple de son autre extrémité 320, elle déplace ladite cale 310 et assure en conséquence le déploiement ou le repli desdites pales 221.

Selon un mode de réalisation préféré mais non limitatif, ladite cale 330 est en liaison hélicoïdale avec ladite tige de commande 300 dont la rotation assure le déplacement de ladite cale 330 et en conséquence le déploiement ou le repli du cône 200 selon le sens de rotation.

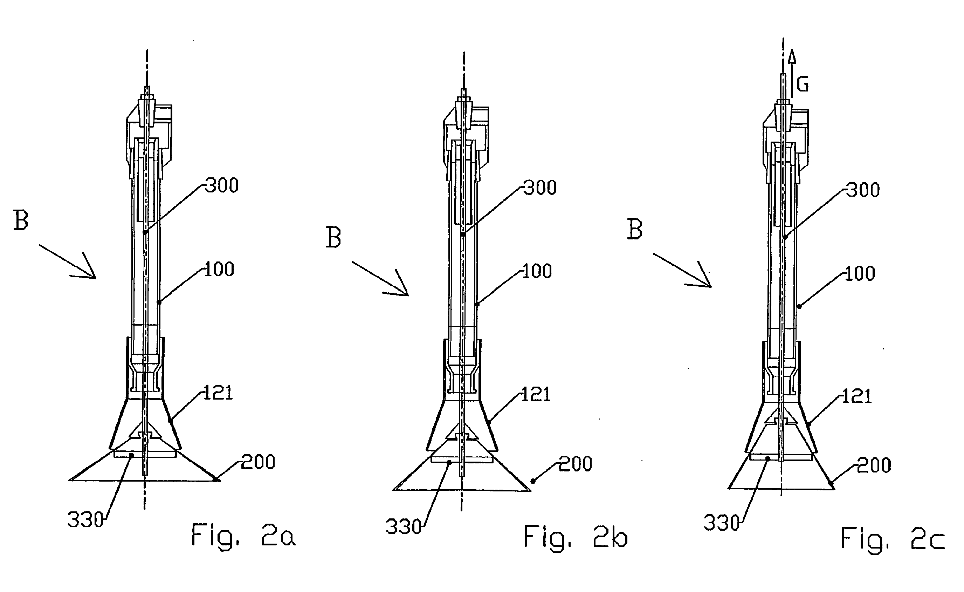

L'utilisation d'une liaison hélicoïdale permet un réglage particulièrement précis de la géométrie de la flamme produite. Selon un mode de réalisation préféré, la liaison hélicoïdale est réalisée au moyen d'une vis micrométrique. Ainsi, par tout moyen susceptible d'entraîner en rotation l'extrémité de tige 320, il est possible de faire varier selon les besoins de l'application, l'envergure et la géométrie du cône de diffusion comme illustré en figures 2a, 2b et 2c. Plus la cale 330 s'écarte du sommet du cône 200 sous l'action de la rotation de la tige 300, plus les pales 221 se replient et referment le cône 200 comme illustré en figure 2c. A contrario, lorsque la tige 300 tourne dans l'autre sens, la cale 330 se rapproche du sommet du cône 200 et écarte les pales 221 pour déployer au maximum le cône 200 et donner une surface la plus large possible à la zone de diffusion de la flamme. La figure 2c illustre en outre une position dans laquelle pour pallier à l'écart trop grand créé par le repli des pales 221 entre le cône 200 et la tuyère 121, le cône est disposé en amont du flux du mélange air avec gaz selon un mouvement de translation illustré par la flèche G garantissant ainsi le maintien de l'effet dit "venturi".

Ce réglage très précis de la géométrie de la flamme pallie les inconvénients de l'art antérieur en proposant la bonne surface d'effet pour la bonne application sans dépense inutile de gaz et sans endommagement des cultures.

Afin de concilier le mouvement de rotation nécessaire au déplacement de ladite cale 330 avec le mouvement de translation nécessaire au déplacement du cône 200 à l'extrémité du corps 100 du brûleur B, ladite tige de commande 300 se divise en deux tiges 300a et 300b l'une 300a étant articulée pour un mouvement en translation par rapport au corps 100 et une deuxième étant articulée pour un mouvement de rotation par rapport à la première. Selon le mode de réalisation non limitatif illustré, la tige 300b est montée pivotante à l'intérieur de la tige 300a qui est tubulaire, la tige 300a étant en liaison hélicoïdale avec ladite cale 330.

Selon un autre mode de réalisation non illustré, le maintien du contact des pales 221 sur la cale 330 est réalisé par la présence sur la périphérie du cône d'un ressort qui tend à rabattre lesdites pales 220 vers l'axe du cône 200.

Le demandeur a avantageusement imaginé pour une application de désherbage thermique une alimentation à gaz commandée en coopération avec un moyen de détection et d'évaluation du spectre foliaire passant sous le brûleur B. Ainsi, le dispositif propose de régler la forme de la flamme ainsi que la puissance de cette dernière, nouvelles possibilités apportées par le brûleur de l'invention, en fonction des données obtenues. Cette coopération pourra très bien être réalisée au moyen d'un automate. Le demandeur a également avantageusement imaginé que cet automate puisse régler par tout actionneur, l'alimentation en air du brûleur B. Bien entendu, les différents mouvements nécessaires au réglage de la position et de la géométrie du cône pourront être réalisés également manuellement.

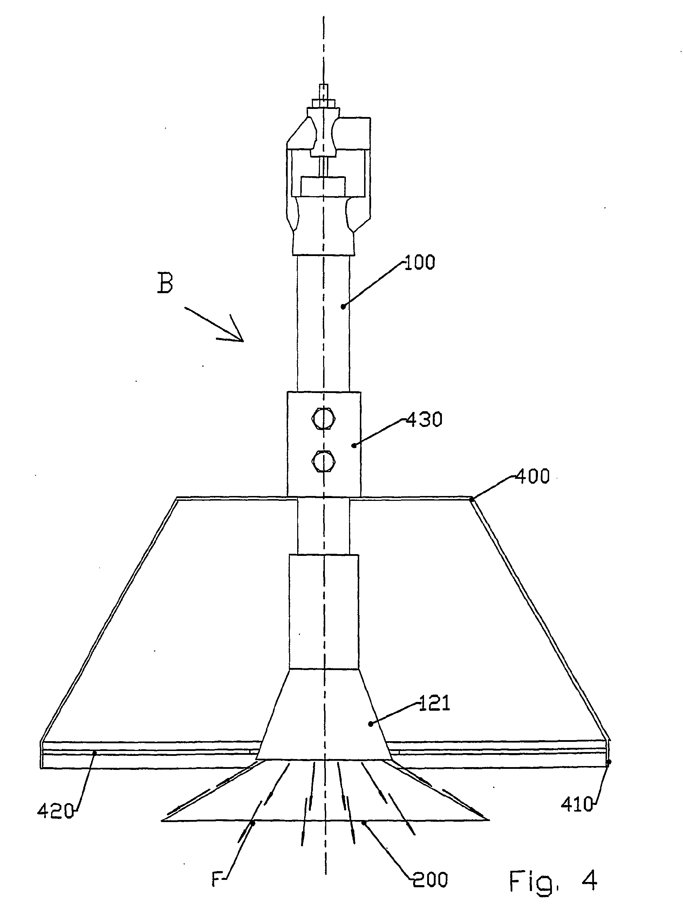

Dans le cadre de l'invention, le brûleur B est, comme illustré par la figure 4, avantageusement associé à une cloche 400 qui, coaxiale à l'axe du diffusion des flammes, est constituée par des surfaces cylindriques extérieures 410 ayant pour rôle de maintenir un périmètre de sécurité autour du brûleur et par des surfaces 420 sensiblement horizontales maintenant l'air chaud au-dessus du point de contact du sol avec les flammes. Comme illustrée, ladite cloche 400 est équipée d'un manchon 430 dont la fixation sur le corps 100 du brûleur B peut être réglée en hauteur autorisant le réglage du niveau de la plaque 420.

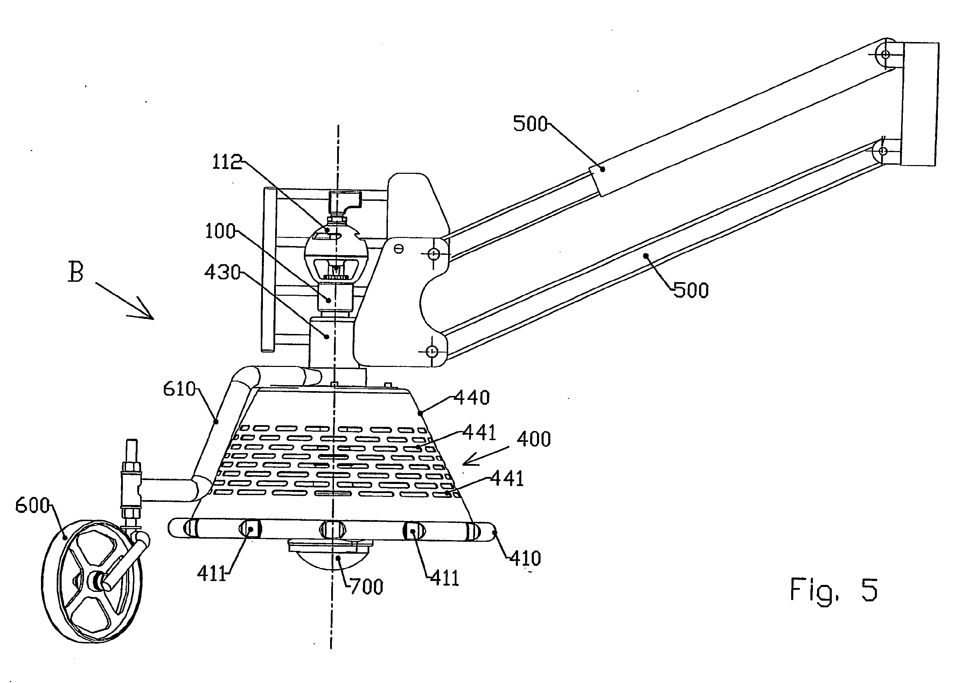

Selon une caractéristique particulièrement avantageuse de l'invention, ladite cloche 400 est montée mobile en rotation par rapport au corps 100 du brûleur B selon l'axe ici vertical du brûleur B lui permettant d'offrir moins de résistance lorsque cette dernière vient en contact avec la tige d'un plant ou le tronc d'un arbre. Ainsi, le manchon 430 réalise une liaison pivot avec le corps du brûleur B. Comme illustré sur le dessin de la figure 5, afin de faciliter cette rotation, la cloche 400 est munie sur son diamètre le plus grand au niveau desdites surfaces cylindriques extérieures 410 de crans 411 privilégiant la rotation de la cloche 400 et non son glissement lorsque cette dernière vient en contact avec la plante.

Cette cloche a donc pour avantage d'éviter le contact du brûleur avec les plantes autour desquelles il doit désherber notamment lorsque ce dernier est associé à un dispositif de désherbage thermique au moyen de bras mobiles 500 tels ceux illustrés en figure 5. Cette cloche 400 a en outre, pour fonction de garantir la bonne diffusion des flammes sur le cône 200 en protégeant le flux de flammes. Elle garantit également la présence d'un halo d'air frais protégeant les plantes en limitant la zone de température élevée.

Comme illustré sur le dessin de la figure 5, un des deux bras 500 est préformé de façon à offrir une possibilité de réglage de sa longueur autorisant ainsi le pivotement de l'axe de brûleur par rapport à la verticale.

Selon une autre caractéristique particulièrement avantageuse de l'invention illustrée par le dessin de la figure 5, ladite cloche 400 et donc le brûleur B sont associés à au moins une roulette 600 au moyen d'un bras 610 venant lui aussi pivoter au moins autour de l'axe ici vertical défini par le brûleur B et autour duquel pivote la cloche 400. Cette roulette 600 garantit une hauteur constante du brûleur B par rapport au sol, caractéristique particulièrement importante dans le cadre d'un désherbage thermique. Néanmoins, pour éviter tout accident dû par exemple, à la présence de motte, le brûleur B comporte en partie inférieure une butée 700 de contact avec le sol constituée d'une surface sphérique évitant le contact du brûleur et de ses composants sensibles avec le sol.

Comme illustrée en figure 5, la jupe 440 de la cloche 400 est ajourée par de petits orifices 441 de façon à laisser passer l'air tout en protégeant les parties sensibles du brûleur B. Une autre caractéristique du dispositif facilitant l'alimentation en air et illustrée par le dessin de la figure 5, réside dans le fait que l'extrémité supérieure 110 du corps 100 du brûleur B est constituée par une sphère 112 qui, comportant des ouvertures pour au moins l'injection gaz et l'entrée de l'air, présente une forme extérieure minimisant les obstacles pour les feuilles ou branches lors de la progression du brûleur et une forme intérieure maximisant l'entrée de l'air pour optimiser le rendement du brûleur B.

Ainsi, par exemple, selon une caractéristique non illustrée, le brûleur est articulé à l'extrémité des bras de façon à pouvoir passer d'une position sensiblement verticale telle qu'illustrée à une position plus inclinée ou même horizontale de façon à offrir la possibilité de désherber selon un plan incliné ou même vertical.

## Revendications

1. Dispositif de désherbage thermique à combustion du type brûleur à gaz dit "brûleur" (B) projetant un mélange d'air et de gaz enflammé en sortie d'une conduite, **CARACTÉRISÉ PAR LE FAIT QU'**il est équipé d'un cône mobile de diffusion (200) dont le sommet (210) est disposé au moins en amont du lieu de création des flammes pour assurer l'éclatement du mélange d'air avec le gaz, le déplacement relatif du cône (200) selon l'axe de diffusion défini par les flammes permettant le réglage de la puissance de ces dernières, ledit cône (200) coopèrant avec une tuyère fixe (121) équipant l'extrémité (120) du brûleur (B) munis du cône de diffusion (200) et participant à la diffusion des flammes, le dispositif étant associé à une cloche (400) qui, coaxiale à l'axe du diffusion des flammes, est constituée par des surfaces cylindriques extérieures (410) ayant pour rôle de maintenir un périmètre de sécurité autour du brûleur (B) et par des surfaces sensiblement horizontales (420) maintenant l'air chaud au-dessus du point de contact du sol avec les flammes, ladite cloche (400) étant montée mobile en rotation par rapport au corps (100) du brûleur (B) selon l'axe du brûleur (B).

2. Dispositif selon la revendication 1, **CARACTÉRISÉ PAR LE FAIT QUE** ledit cône (200) se déploie ou se replie de façon à ce que le diamètre de la base dudit cône (200) évolue pendant le fonctionnement du brûleur (B) selon l'utilisation du brûleur (B) de sorte que la flamme adopte la configuration déployée ou repliée du cône (200) pendant le fonctionnement, ledit cône (200) étant constitué d'un sommet (210) et d'une partie inférieure (220) composée d'une pluralité de pales (221) montées articulées par rapport au sommet pour passer d'une position déployée à une position repliée et vice-versa.

3. Dispositif selon la revendication 2 du type de celui comportant un corps (100) principal à une extrémité (120) duquel est créée une flamme, **CARACTÉRISÉ PAR LE FAIT QUE** l'ouverture et la fermeture du cône (200) ainsi que son déplacement relatif par rapport au corps (100) du brûleur (B) sont mis en oeuvre par les déplacements relatifs contrôlés d'au moins une tige de commande (300).

4. Dispositif selon la revendication 3, **CARACTÉRISÉ PAR LE FAIT QU'**il comporte une cale (330) située à l'intérieur du cône (200) en appui constant avec lesdites pales (221) et en liaison avec ladite tige de commande (300) dont l'actionnement assure le déplacement de ladite cale (330) et le déploiement ou le repli desdites pales (221).

5. Dispositif selon la revendication 4, **CARACTÉRISÉ PAR LE FAIT QUE** ladite cale (330) est en liaison hélicoïdale avec ladite tige (300) dont la rotation assure le déplacement de ladite cale (330) à l'intérieur du cône (200).

6. Dispositif selon la revendication 3, **CARACTÉRISÉ PAR LE FAIT QUE** lesdites pales (221) sont de dimensions telles et disposées de telle façon, que leurs côtés se chevauchent d'une pale sur l'autre quelle que soit leur position.

7. Dispositif selon la revendication 1, **CARACTÉRISÉ PAR LE FAIT QUE** le brûleur (B) est associé à au moins une roulette (600) au moyen d'un bras (610) venant pivoter autour de l'axe vertical défini par le brûleur (B).

8. Dispositif selon la revendication 1, **CARACTÉRISÉ PAR LE FAIT QUE** le brûleur (B) comporte en partie inférieure une butée (700) de contact avec le sol constituée d'une surface sphérique.

9. Dispositif selon la revendication 1, **CARACTÉRISÉ PAR LE FAIT QUE** la tuyère fixe (121) et le cône de diffusion adopte une conicité différente ou une pente différente.

10. Dispositif selon la revendication 1, **CARACTÉRISÉ PAR LE FAIT QUE** l'extrémité supérieure (110) du corps (100) du brûleur (B) est constituée par une sphère (112) qui comporte des ouvertures pour au moins l'injection gaz et l'entrée de l'air.

11. Procédé de travail dans le cadre d'un désherbage thermique, d'un dispositif de type brûleur à gaz (B) selon l'ensemble les revendications 1 et 2 associé à un moyen de détection du spectre foliaire, **CARACTÉRISÉ EN CE QU'**il consiste à augmenter ou à diminuer la puissance ou la géométrie des flammes respectivement par déplacement ou par ouverture et fermeture du cône (200) selon l'augmentation ou la diminution du spectre foliaire détecté.

12. Dispositif selon la revendication 1, **CARACTÉRISÉ PAR LE FAIT QUE** la cloche (400) est munie sur son diamètre le plus grand an niveau desdites surfaces cylindriques extérieures (410) de crans (411).

13. Dispositif selon la revendication 1, **CARACTÉRISÉ PAR LE FAIT QUE** la jupe (440) de la cloche (400) est ajourée par de petits orifices (441) de façon à laisser passer l'air tout en protégeant les parties sensibles du brûleur (B).

## Claims

1. Gas burner type combustion device for thermal weed killing called "burner" (B) projecting a mix of air and gas inflamed at the outlet of a pipe, **characterised in that** it is fitted with a movable diffusion cone (200) whose tip (210) is located at least upstream from the flame creation zone so as to ensure the bursting of the air and gas mix, the relative displacement of the cone (200) according to the axis of diffusion defined by the flames allowing to adjust the strength of the latter, said cone (200) co-operating with a fixed nozzle tip (121) equipping the lower end (120) of the burner (B) equipped with the diffusion cone (200) and participating in the diffusion of the flames, device being associated with a bell cover (400) which, being coaxial to the axis of diffusion of the flames, is constituted by the external cylindrical surfaces (410) with the purpose of maintaining a safety perimeter around the burner (B) and by the substantially horizontal surfaces (420) maintaining the hot air above the contact point of the ground with the flames, said bell cover (400) being rotary mounted in a moveable manner in relation to the body (100) of the burner (B) along the axis of the burner (B).

2. Device set forth in claim 1, **characterised in that** said cone (200) deploys or retracts so that the diameter of the base of said cone (200) changes during the operating of the burner (B) according to the usage of the burner (B) so that the flame takes on the deployed or retracted shape of the cone (200) whilst in operation, said cone (200) being constituted in a tip (210) and a lower part (220) comprised of a plurality of blades (221) articulated in relation to the tip so as to move from a deployed position to a retracted position and vice versa.

3. Device set forth in claim 2 of the type comprising a main body (100) at an end (120) of which a flame is created, **characterised in that** the opening and closing of the cone (200) as well as its relative displacement in relation to the body (100) of the burner (B) are actuated by the relative controlled displacements of at least one control rod (300).

4. Device set forth in claim 3, **characterised in that** it comprises a spacer (330) located on the inside of the cone (200) and constantly touching said blades (221) and connected to said control rod (300) whose actuation ensures the displacement of said spacer (330) and the deployment or retraction of said blades (221).

5. Device set forth in claim 4, **characterised in that** said spacer (330) is in helical connection with said rod (300) whose rotation ensures the displacement of said spacer (330) on the inside of the cone (200).

6. Device set forth in claim 3, **characterised in that** said blades (221) have dimensions such and are placed in such a way that their sides overlap, one blade over the other irrespective of their position.

7. Device set forth in claim 1, **characterised in that** the burner (B) is associated to at least one wheel (600) by means of an arm (610) itself swivelling at least around the vertical axis defined by the burner (B).

8. Device set forth in claim 1, **characterised in that** the burner (B) comprises a protector (700), on its lower part, in contact with the ground constituted of a spherical surface.

9. Device set forth in claim 1, **characterised in that** the fixed nozzle tip (121) and the diffusion cone take a different conical shape or a different slope.

10. Device set forth in claim 1, **characterised in that** the upper end (110) of the body (100) of the burner (B) is constituted of a sphere (112) which comprises openings to allow at least the injection of gas and the intake of air.

11. Method of operating, within the scope of thermal weed killing, of a gas burner (B) type device set forth in claims 1 and 2 associated with a means for detecting the foliar spectrum, **characterised in that** it consists in increasing or reducing the strength or shape of the flames via respectively displacing or opening and closing the cone (200) according to the increase or reduction in the detected foliar spectrum.

12. Device set forth in claim 1, **characterised in that** the bell cover (400) is equipped, on its greatest diameter on said external cylindrical surfaces (410), with notches (411).

13. Device set forth in claim 1, **characterised in that** the skirt (440) of the bell cover (400) is pierced with little orifices (441) so that air can pass through whilst protecting the fragile components of the burner (B).

## Patentansprüche

1. Thermischer Verbrennungs-Unkrautvernichter nach Art eines Gasbrenners, als "Brenner" (B) bezeichnet, der eine Mischung aus Luft und Gas ausstößt, die am Ausgang einer Leitung entzündet wird, **dadurch gekennzeichnet, dass** er mit einem bewegbaren Ausbreitungskegel (200) ausgestattet ist, dessen Spitze (210) mindestens oberhalb des Entstehungsortes der Flammen angeordnet ist, um die Explosion der Luftmischung mit dem Gas sicherzustellen, wobei die relative Verschiebung des Kegels (200) an der Ausbreitungsachse entlang, die durch die Flammen definiert wird, die Einstellung der Leistung derselben ermöglicht, wobei der Kegel (200) mit einer feststehenden Düse (121) zusammenwirkt, die das Ende (120) des Brenners (B) ausstattet, das mit dem Ausbreitungskegel (200) versehen ist, und zur Ausbreitung der Flammen beiträgt, wobei die Vorrichtung mit einer Haube (400) verbunden ist, die koaxial zur Ausbreitungsachse der Flammen aus äußeren zylindrischen Oberflächen (410), deren Aufgabe es ist, einen Sicherheitsumkreis um den Brenner (B) herum zu erhalten, und aus im Wesentlichen waagerechten Oberflächen (420), welche die heiße Luft über dem Berührungspunkt des Bodens mit den Flammen halten, besteht, wobei die Haube (400) im Verhältnis zum Körper (100) des Brenners (B) an der Achse des Brenners (B) entlang drehmäßig bewegbar montiert ist.

2. Vorrichtung nach Anspruch 1, **dadurch gekennzeichnet, dass** der Kegel (200) sich ausfaltet oder zusammenfaltet, so dass sich der Durchmesser der Grundfläche des Kegels (200) während des Betriebs des Brenners (B) gemäß der Verwendung des Brenners (B) verändert, so dass die Flamme die ausgefaltete oder zusammengefaltete Konfiguration des Kegels (200) während des Betriebs annimmt, wobei der Kegel (200) aus einer Spitze (210) und einem unteren Teil (220) besteht, der aus einer Vielzahl von Lamellen (221) besteht, die im Verhältnis zur Spitze gelenkig montiert sind, um von einer ausgefalteten Position in eine zusammengefaltete Position und umgekehrt überzugehen.

3. Vorrichtung nach Anspruch 2 von der Art umfassend einen Hauptkörper (100) an dessen einem Ende (120) eine Flamme erstellt wird, **dadurch gekennzeichnet, dass** das Öffnen und Schließen des Kegels (200) sowie seine relative Verschiebung im Verhältnis zu dem Körper (100) des Brenners (B) durch die relativen gesteuerten Verschiebungen mindestens einer Steuerstange (300) umgesetzt werden.

4. Vorrichtung nach Anspruch 3, **dadurch gekennzeichnet, dass** sie einen Keil (330) umfasst, der sich im Innern des Kegels (200) in ständiger Anlehnung mit den Lamellen (221) und in Verbindung mit der Steuerstange (300) befindet, deren Betätigung die Verschiebung des Keils (330) und die Ausfaltung oder die zusammenfaltung der Lamellen (221) sicherstellt.

5. Vorrichtung nach Anspruch 4, **dadurch gekennzeichnet, dass** der Keil (330) in Schraubenverbindung mit der Stange (300) steht, deren Drehung die Verschiebung des Keils (330) im Innern des Kegels (200) sicherstellt.

6. Vorrichtung nach Anspruch 3, **dadurch gekennzeichnet, dass** die Lamellen (221) derart bemessen und angeordnet sind, dass sich ihre Seiten von Lamelle zu Lamelle unabhängig von ihrer Position überlappen.

7. Vorrichtung nach Anspruch 1, **dadurch gekennzeichnet, dass** der Brenner (B) mit mindestens einem Rädchen (600) anhand eines Armes (610) verbunden ist, der um die senkrechte Achse herum, die von dem Brenner (B) definiert wird, schwenkbar ist.

8. Vorrichtung nach Anspruch 1, **dadurch gekennzeichnet, dass** der Brenner (B) im unteren Teil einen Anschlag (700) zur Berührung mit dem Boden umfasst, der aus einer sphärischen Oberfläche besteht.

9. Vorrichtung nach Anspruch 1, **dadurch gekennzeichnet, dass** die feststehende Düse (121) und der Ausbreitungskegel eine unterschiedliche Kegelform oder eine unterschiedliche Neigung annehmen.

10. Vorrichtung nach Anspruch 1, **dadurch gekennzeichnet, dass** das obere Ende (110) des Körpers (100) des Brenners (B) aus einer Sphäre (112) besteht, die Öffnungen mindestens zum Einspritzen von Gas oder den Eintritt der Luft umfasst.

11. Arbeitsverfahren im Rahmen einer thermischen Unkrautvernichtung einer Vorrichtung nach Art eines Gasbrenners (B) nach den gesamten Ansprüchen 1 und 2, der mit einem Mittel zum Erfassen des Blattspektrums verbunden ist, **dadurch gekennzeichnet, dass** es darin besteht, die Leistung oder die Geometrie der Flammen jeweils durch Verschieben oder durch Öffnen und Schließen des Kegels (200) gemäß der Zunahme oder der Abnahme des erfassten Blattspektrums zu erhöhen oder zu verringern.

12. Vorrichtung nach Anspruch 1, **dadurch gekennzeichnet, dass** die Haube (400) an ihrem größten Durchmesser an den äußeren zylindrischen Oberflächen (410) mit Einkerbungen (411) versehen ist.

13. Vorrichtung nach Anspruch 1, **dadurch gekennzeichnet, dass** die Schürze (440) der Haube (400) von kleinen Öffnungen (441) durchbrochen ist, um die Luft durchzulassen und dabei die empfindlichen Teile des Brenners (B) zu schützen.
